# FASCICULE DE BREVET EUROPEEN

(11) **EP 2 582 534 B1**
(45) Date de publication et mention de la délivrance du brevet: **03.07.2019**
(21) Numéro de dépôt: 11724658.7
(22) Date de dépôt: 14.06.2011
(51) Int. Cl.: B60H 1/00, F25B 29/00

(54) **SYSTÈME DE CONDITIONNEMENT THERMIQUE D'UN VÉHICULE AUTOMOBILE**
HEISSKONDITIONIERUNGSSYSTEM FÜR EIN KRAFTFAHRZEUG
HEAT CONDITIONING SYSTEM FOR A MOTOR VEHICLE

(30) Priorité: 17.06.2010 FR 1002571
(43) Date de publication de la demande: 24.04.2013
(73) Titulaire: Valeo Systemes Thermiques, 78320 Le Mesnil Saint Denis (FR)
(72) Inventeur: BENOUALI, Jugurtha, F-92140 Clamart (FR); WITTMANN, Klaus, F-78320 Le Mesnil Saint Denis (FR); KARL, Stefan, F-78112 Fourqueux (FR)
(86) Numéro de dépôt international: PCT/EP2011/059827
(87) Numéro de publication internationale: WO 2011/157700

(56) Documents cités:
- FR-A1- 2 821 038
- FR-A1- 2 865 070
- FR-A1- 2 884 058
- US-A- 6 092 376

## Description

L'invention se rapporte au domaine des véhicules électriques et plus particulièrement aux systèmes de conditionnement thermique de tels véhicules.

Le document FR 2 865 070 décrit un tel véhicule selon le préambule de la revendication 1.

Les véhicules électriques ne présentant plus de moteur thermique, la fonction de chauffage de l'habitacle du véhicule n'est plus réalisée par un radiateur thermique dans lequel circule le liquide de refroidissement du moteur thermique. Une solution proposée est d'utiliser des dispositifs de chauffage électrique, tels que des radiateurs électriques, à la place du radiateur thermique. Cette solution présente l'inconvénient de consommer l'énergie électrique de la batterie du véhicule, réduisant ainsi l'autonomie kilométrique du véhicule.

Afin de réduire la consommation électrique de la batterie du véhicule et de fournir un chauffage de l'habitacle du véhicule, il a été proposé d'utiliser une boucle de climatisation fonctionnant en mode pompe à chaleur. La boucle de climatisation comprend de manière connue un compresseur, un condenseur, un dispositif de détente et un évaporateur et permet classiquement de refroidir un flux d'air traversant une installation de climatisation du véhicule via l'évaporateur. Dans le cas présent, la boucle de climatisation est utilisée de manière à fournir de la chaleur au flux d'air traversant l'installation de climatisation. Pour se faire, la boucle de climatisation est utilisée de sorte à ce que l'évaporateur fonctionne comme un condenseur et réchauffe le flux d'air le traversant. Cependant, l'utilisation de la boucle de climatisation en mode pompe à chaleur n'est pas complètement satisfaisant puisque les performances en mode pompe à chaleur dépendent des conditions climatiques extérieures.

Plus précisément, lors des conditions climatiques hivernales, la température de l'air extérieur est trop faible pour que cet air extérieur soit utilisé comme une source d'énergie thermique pour la boucle de climatisation fonctionnant en mode pompe à chaleur. En effet, l'utilisation de l'air extérieur comme source d'énergie thermique lors des conditions hivernales engendre des problèmes de givrage de l'échangeur de chaleur dans lequel l'évaporation du fluide s'effectue. Ce givrage entraîne une baisse du coefficient de performance de la boucle de climatisation et nécessite un apport d'énergie supplémentaire pour dégivrer l'échangeur de chaleur givré et revenir à une valeur de coefficient de performance satisfaisante. Enfin, lorsque la température de l'air extérieure est extrêmement basse (par exemple -20°C), l'énergie thermique de cet air extérieur est insuffisant pour réaliser le cycle thermodynamique du fluide de la boucle de climatisation.

En parallèle, la température de la batterie du véhicule électrique doit être la plus constante possible afin de ne pas diminuer sa durée de vie. Pour cela, il est nécessaire de disposer à la fois d'une source pour réchauffer la batterie lorsque la température extérieure est basse et d'une source pour refroidir la batterie lorsque la température extérieure est élevée. La source pour le réchauffement de la batterie peut être un dispositif de chauffage électrique ou un circuit d'eau transportant des calories en provenance de la boucle de climatisation.

Cependant, ces solutions ne sont pas convenables. En effet, soit le véhicule comprend un dispositif de chauffage électrique pour chauffer la batterie et un dispositif de chauffage électrique supplémentaire pour chauffer l'air de l'habitacle, soit le véhicule comprend un dispositif de chauffage électrique pour la batterie et un circuit d'eau pour le chauffage de l'habitacle. Or, la multiplication des dispositifs de chauffage électrique consomme l'énergie électrique de la batterie et le circuit d'eau encombre le véhicule et représente un coût supplémentaire.

Il existe donc un besoin de gérer à la fois le conditionnement thermique de la batterie du véhicule électrique afin de prolonger sa durée de vie et le conditionnement thermique de l'habitacle du véhicule afin d'assurer un confort thermique aux passagers du véhicule électrique sans pour autant diminuer l'autonomie kilométrique du véhicule.

L'invention apporte une solution à ce problème en proposant un système de conditionnement thermique d'un véhicule automobile selon la revendication 1.

Par ce système, le conditionnement thermique de la batterie est assuré par la combinaison du dispositif de chauffage électrique et de la boucle de climatisation et ce même dispositif de chauffage électrique est utilisé conjointement avec la boucle de climatisation pour le conditionnement thermique de l'habitacle du véhicule. En outre, ce système de conditionnement thermique permet de supprimer l'utilisation d'un circuit d'eau encombrant et coûteux pour le chauffage de l'air de l'habitacle. Le gain de poids du système de conditionnement thermique est également réalisé par la suppression du circuit d'eau. En outre, ce système de conditionnement thermique permet de réduire l'encombrement de l'unité de traitement thermique.

### Avantageusement :

- le moyen de traitement thermique est en contact avec l'un des au moins deux échangeurs de chaleur.
- l'échangeur de chaleur en contact avec le moyen de traitement thermique est un évaporateur.

L'invention porte également sur un procédé de gestion thermique d'un système de conditionnement thermique selon la revendication 4.

D'autres caractéristiques, détails et avantages de l'invention ressortiront plus clairement à la lecture de la description donnée ci-après à titre indicatif en relation avec des dessins dans lesquels :
- la figure 1 représente un premier mode de réalisation d'un système de conditionnement thermique
- la figure 2 représente le cycle thermodynamique du fluide réfrigérant de la boucle de climatisation du système de la figure 1
- la figure 3 représente un deuxième mode de réalisation d'un système de conditionnement thermique
- la figure 4 représente le cycle thermodynamique du fluide réfrigérant de la boucle de climatisation du système de la figure 3
- la figure 5 représente une variante du deuxième mode de réalisation
- la figure 6 représente le cycle thermodynamique du fluide réfrigérant de la boucle de climatisation du système de la figure 5
- la figure 7 représente une autre variante du deuxième mode de réalisation du système
- la figure 8 représente le cycle thermodynamique du fluide réfrigérant de la boucle de climatisation du système de la figure 7
- la figure 9 représente une variante selon l'invention du premier et du deuxième mode de réalisation du système
- les figures 10, 11 et 12 représentent le cycle thermodynamique du fluide réfrigérant de la boucle de climatisation du système comprenant la variante de la figure 9

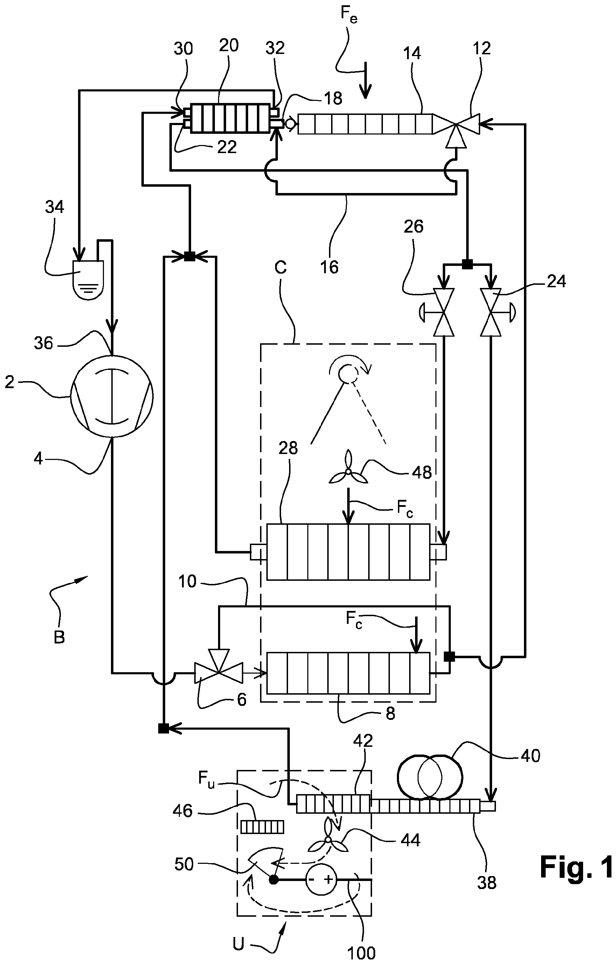

La figure 1 représente une vue schématique d'un système de conditionnement thermique d'un véhicule électrique.

Le système de conditionnement thermique comprend une boucle de climatisation B et une unité de traitement thermique U d'une batterie 100 du véhicule.

Cette boucle de climatisation B comprend un compresseur, au moins deux échangeurs de chaleur et au moins un dispositif de détente. Le compresseur est un compresseur électrique 2 dans lequel un fluide réfrigérant est comprimé. Le compresseur électrique 2 comprend une sortie 4 à travers laquelle le fluide réfrigérant à haute pression et haute température s'évacue pour atteindre une première vanne 6 trois-voies. Une entrée d'un échangeur de chaleur, dit condenseur interne 8, est reliée à une des deux sorties de la première vanne 6 trois-voies, ce condenseur interne 8 étant localisé à l'intérieur d'une installation de climatisation C. L'autre sortie de la première vanne 6 trois-voies aboutit à un canal de contournement 10 se terminant au niveau d'une sortie du condenseur interne 8. Ainsi, il est possible que le fluide réfrigérant en provenance du compresseur électrique 2 contourne le condenseur interne 8 et ne le traverse pas. La sortie du condenseur interne 8 est reliée à une deuxième vanne 12 trois-voies dont une sortie est reliée à une entrée d'un échangeur de chaleur, dit condenseur externe 14, et une autre sortie est reliée à un conduit de contournement 16. Le condenseur externe 14 est localisé à l'intérieur du véhicule électrique au niveau de la face avant du véhicule et est traversé par un flux d'air Fe en provenance de l'extérieur. Une sortie du condenseur externe 14 est reliée à une première entrée 18 d'un échangeur de chaleur interne 20. Le conduit de contournement 16 est relié à la première entrée 18 de l'échangeur de chaleur interne 20. Ainsi, le conduit de contournement 16 permet au fluide réfrigérant de contourner le condenseur externe 14 et de ne pas le traverser. Le fluide réfrigérant passe alors directement de la deuxième vanne 12 trois-voies à la première entrée 18 de l'échangeur de chaleur interne 20. Le fluide réfrigérant, toujours à haute pression et traversant l'échangeur de chaleur interne 20, sort de ce dernier par la première sortie 22 de l'échangeur de chaleur interne 20 pour atteindre deux dispositifs de détente 24, 26. Les deux dispositifs de détente 24, 26 sont montés en parallèle l'un par rapport à l'autre.

Un premier dispositif de détente 24 est relié à un échangeur de chaleur, dit évaporateur d'onduleur 38. L'évaporateur d'onduleur 38 assure le refroidissement d'un onduleur 40 commandant électriquement la batterie 100. Un autre échangeur de chaleur, dit échangeur batterie 42, est relié à l'évaporateur d'onduleur 38 et permet de refroidir un flux d'air Fu le traversant, ce flux d'air Fu circulant à l'intérieur de l'unité de traitement thermique U. Autrement dit, l'échangeur batterie se comporte comme un évaporateur. Le flux d'air Fu ainsi refroidi atteint la batterie 100 par l'intermédiaire d'un pulseur 44 et permet d'abaisser sa température. L'échangeur batterie 42 est relié à la deuxième entrée 30 de l'échangeur de chaleur interne 20. Le fluide réfrigérant traversant le premier évaporateur 42 atteint donc l'échangeur de chaleur interne 20 puis l'accumulateur 34 et enfin le compresseur 2.

Un deuxième dispositif de détente 26 est relié à un échangeur de chaleur, dit évaporateur interne 28. Localisé à l'intérieur du système de climatisation C, le évaporateur interne 28 est traversé par le fluide réfrigérant à l'état de basse pression et de basse température en provenance du deuxième dispositif de détente 26. En sortie de l'évaporateur interne 28, le fluide réfrigérant circule jusqu'à une deuxième entrée 30 de l'échangeur de chaleur interne 20. Le fluide réfrigérant, à basse pression, traverse l'échangeur de chaleur interne 20 pour échanger de la chaleur avec le fluide réfrigérant à haute pression circulant entre la première entrée 18 et la première sortie 22. Le fluide réfrigérant à basse pression sort de l'échangeur de chaleur interne 20 via une deuxième sortie 32 pour atteindre un accumulateur 34. Une entrée 36 du compresseur électrique 2 est reliée à la sortie de l'accumulateur 34.

L'unité de traitement thermique U comprend en outre un moyen de traitement thermique. Dans ce mode de réalisation, le moyen de traitement thermique est un dispositif de chauffage électrique 46. Par exemple, ce dispositif de chauffage électrique 46 est formé par des éléments résistifs à coefficient de température positif. Lorsque cela est nécessaire, le flux d'air Fu mis en mouvement par le pulseur 44 traverse le dispositif de chauffage électrique 46, se réchauffe et atteint ensuite la batterie 100 pour la chauffer. Afin d'assurer une gestion thermique optimale de la batterie 100, l'unité de traitement thermique 100 est isolée thermiquement du reste du véhicule. Pour cela, l'unité de traitement thermique comporte par exemple une enceinte adiabatique. Un volet 50 situé à l'intérieur de l'unité de traitement thermique U permet de répartir le flux d'air Fu soit vers le dispositif de chauffage électrique 46 soit vers le premier évaporateur 42.

La mise en oeuvre du système de conditionnement thermique va maintenant être décrite.

Lors de conditions climatiques estivales, il est nécessaire de refroidir la batterie 100 et l'habitacle du véhicule. Pour cela, la boucle de climatisation est utilisée. Le compresseur électrique 2 est mis en oeuvre et comprime le fluide réfrigérant. En sortie du compresseur, le fluide réfrigérant est alors à haute pression et haute température. La première vanne 6 trois-voies est ouverte de sorte à faire circuler le fluide vers le canal de contournement 10. L'accès au condenseur interne 8 est alors interdit. Le fluide réfrigérant atteint ensuite la deuxième vanne 12 trois-voies qui autorise le passage vers le condenseur externe 14. L'accès au conduit de contournement 16 est interdit. En traversant le condenseur externe 14, le fluide réfrigérant se condense et cède de la chaleur au flux d'air Fe traversant le condenseur externe 14. Le fluide réfrigérant haute pression atteint ensuite l'échangeur de chaleur interne 20 et cède de la chaleur au fluide réfrigérant basse pression passant à l'intérieur de l'échangeur de chaleur interne 20. Le fluide réfrigérant arrive ensuite vers les deux dispositifs de détente 24, 26. Le premier 24 et le deuxième 26 dispositifs de détente sont ouverts de sorte à autoriser le passage du fluide réfrigérant et détendre ce dernier. En sortie des deux dispositifs de détente 24, 26, le fluide réfrigérant est à basse pression et à basse température.

D'une part, lorsque le fluide réfrigérant atteint l'évaporateur interne 28 et le traverse, il capte de la chaleur en le traversant. De ce fait, le flux d'air Fc traversant l'évaporateur interne 28 se refroidit. En atteignant l'habitacle du véhicule sous l'action d'un pulseur 48, ce flux d'air refroidi permet de diminuer la température de l'air de l'habitacle. Le fluide réfrigérant sortant de l'évaporateur interne 28 atteint ensuite l'échangeur de chaleur interne 20, capte de la chaleur en provenance du fluide réfrigérant haute pression, atteint de l'accumulateur 34 puis le compresseur 2.

D'autre part, lorsque le fluide réfrigérant atteint l'évaporateur d'onduleur 38 et le traverse, il capte de la chaleur en provenance de l'onduleur 40 de sorte à le refroidir. Traversant ensuite l'échangeur batterie 42, le fluide réfrigérant capte de la chaleur en provenance du flux d'air Fu circulant à l'intérieur de l'unité de traitement thermique U. Ce flux d'air Fu ainsi refroidi permet d'abaisser la température de la batterie 100 lorsqu'il entre en contact avec cette dernière.

Une fois le fluide réfrigérant sorti de l'échangeur batterie 42, il atteint l'échangeur de chaleur interne 20, le traverse puis circule à travers l'accumulateur 34 et rejoint enfin le compresseur 2.

Lors de conditions climatiques hivernales, la batterie 100 et l'habitacle du véhicule ont besoin d'être chauffés. Pour cela, le dispositif de chauffage électrique 46 est mis en oeuvre et chauffe le flux d'air Fu circulant à l'intérieur de l'unité de traitement thermique U. Lorsqu'il entre en contact avec la batterie 100, ce flux d'air Fu chaud permet d'augmenter la température de la batterie 100. L'énergie électrique utilisée par le dispositif de chauffage électrique 46 sous la forme d'énergie thermique participe également à la mise en oeuvre de la boucle de climatisation B.

Le fluide réfrigérant, à haute pression et haute température du fait de la compression du compresseur, traverse la première vanne 6 trois-voies puis traverse le condenseur interne 8. La première vanne 6 trois-voies interdit donc le passage du fluide réfrigérant vers le canal de contournement 10. A l'intérieur du condenseur interne 8, le fluide réfrigérant cède de la chaleur au flux d'air Fc traversant l'installation de climatisation C, ce flux d'air Fc permet d'augmenter la température de l'air de l'habitacle. Le fluide réfrigérant circule ensuite à travers la deuxième vanne 12 trois-voies et contourne le condenseur externe 14 via le conduit de contournement 16. La deuxième vanne 12 trois-voies interdit donc le passage du fluide réfrigérant vers le condenseur externe 14. Le fluide réfrigérant traverse ensuite l'échangeur de chaleur interne 20 puis atteint les deux dispositifs de détente 24, 26.

Le fluide réfrigérant traversant le premier dispositif de détente 24 passe à l'état basse pression et basse température puis atteint l'évaporateur d'onduleur 38. Etant donné la grande dissipation thermique de l'onduleur 40 lors de son fonctionnement, il est toujours nécessaire de le refroidir même lors des conditions hivernales. Ainsi, le fluide réfrigérant traversant l'évaporateur d'onduleur 38 capte de la chaleur en provenance de l'onduleur 40 et permet à se dernier de se refroidir.

Afin d'assurer un fonctionnement optimale de la boucle de climatisation B, c'est-à-dire obtenir un coefficient de performance optimal, l'énergie thermique du dispositif de chauffage électrique 46 est utilisée pour chauffer le fluide réfrigérant traversant l'échangeur batterie 42. Autrement dit, l'énergie électrique puisée de la batterie 100 par le dispositif de chauffage électrique 46 est à la fois utilisée pour la fonction de chauffage de la batterie 100 et la fonction d'apport énergétique pour la boucle de climatisation B afin d'assurer un cycle thermodynamique performant. En effet, l'énergie sous forme de chaleur, cédée par le fluide réfrigérant au niveau du condenseur interne 8 pour chauffer l'air de l'habitacle, doit être récupérée pour compléter le cycle thermodynamique du fluide réfrigérant lorsqu'il circule à l'intérieur de la boucle de climatisation B. Etant donné que l'air extérieur est à basse température (conditions climatiques hivernales), il ne peut pas fournir l'énergie nécessaire au fluide réfrigérant pour terminer son cycle thermodynamique. L'apport énergétique provient donc du dispositif de chauffage électrique 46.

Par conséquent, le fluide réfrigérant traversant l'échangeur batterie 42 capte de la chaleur en provenance du dispositif de chauffage électrique 46 puis traverse l'échangeur de chaleur interne 20, l'accumulateur 34 et rejoint le compresseur 2.

Le fluide réfrigérant traversant le deuxième dispositif de détente 26 atteint l'évaporateur interne 28 dans lequel il capte de la chaleur en provenance du flux d'air Fc circulant à l'intérieur de l'installation de climatisation C. Dans le but de minimiser la consommation électrique de la boucle de climatisation B, c'est-à-dire du compresseur 2, l'installation de climatisation C fonctionne en mode recyclage d'air, c'est-à-dire que le flux d'air Fc circulant à l'intérieur de l'installation de climatisation C provient de l'habitacle du véhicule et non de l'extérieur. En sortie de l'évaporateur interne 28, le fluide traverse l'échangeur de chaleur interne 20 puis l'accumulateur 34 et enfin le compresseur 2. Ce mode de fonctionnement recyclage de l'installation de climatisation C est choisi pour les raisons suivantes.

Le système de conditionnement thermique permet de diminuer la consommation électrique de la batterie tout en assurant un chauffage de la batterie et de l'air de l'habitacle. A cette fin, lors de conditions climatiques hivernales, le dispositif de chauffage électrique 46 et la boucle de climatisation B sont mis en oeuvre et l'installation de climatisation C fonctionne en mode recyclage. Ainsi, plus la boucle de climatisation C fonctionne, plus l'air de l'habitacle se réchauffe. De ce fait, la température de l'air de l'habitacle devient au fur et à mesure suffisamment élevée pour que l'air de l'habitacle puisse devenir une source d'énergie thermique pour la boucle de climatisation B. Cette source d'énergie est puisée de l'air de l'habitacle via le deuxième échangeur de chaleur 28. En effet, le fluide réfrigérant capte la chaleur de l'air de l'habitacle lorsqu'il traverse l'évaporateur interne 28. En conséquence, la consommation électrique du dispositif de chauffage électrique 46 est réduite au fur et à mesure que l'air de l'habitacle se réchauffe. Autrement dit, plus l'air de l'habitacle se réchauffe, plus cet air remplace en énergie thermique l'apport du dispositif de chauffage électrique 46 pour le cycle thermodynamique du fluide réfrigérant. Pour se faire, on mesure la température de l'air de l'habitacle via un capteur de température. Au final, le dispositif de chauffage électrique 46 ne consomme que l'énergie électrique nécessaire pour chauffer la batterie 100 et la boucle de climatisation B fonctionne comme une pompe à chaleur puisant l'énergie thermique dans l'air qu'elle réchauffe.

En combinant le système de conditionnement thermique avec l'installation de climatisation C fonctionnant en mode recyclage, l'air de l'habitacle est maintenu à la température désirée, la température de la batterie 100 reste constante et la consommation de l'énergie électrique de la batterie est minime. En outre, puisque l'évaporateur interne 28 fonctionne, l'humidité créée par la respiration des passagers du véhicule est éliminée par condensation de l'eau au niveau cet évaporateur interne 28, ceci éliminant le risque d'apparition de buée du pare-brise lorsque l'installation de climatisation C est en mode recyclage.

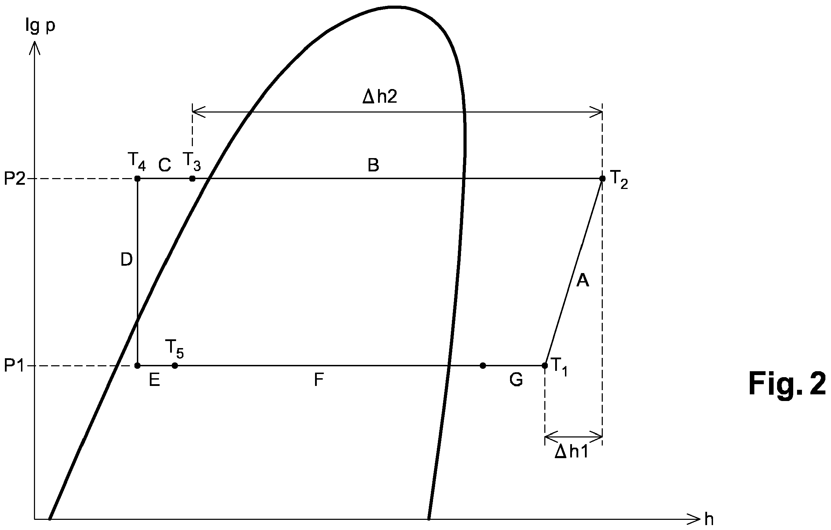

La figure 2 illustre le cycle thermodynamique du fluide réfrigérant lorsque la boucle de climatisation B est mis en oeuvre pour des conditions climatiques hivernales. Ce cycle représente l'enthalpie h en fonction de la pression P.

En entrée du compresseur 2, le fluide est à une température T1 et à une pression P1, ici considérée comme la basse pression. En sortie du compresseur 2 et donc une fois compressé, le fluide réfrigérant est à une température T2 supérieure à T1 et à une pression P2 supérieure à P1. La pression P2 est considérée comme la haute pression. Cette compression du fluide réfrigérant correspond à une étape A du cycle thermodynamique.

Lorsque le fluide réfrigérant traverse le condenseur interne 8, il cède de la chaleur au flux d'air Fc de l'installation de climatisation C et sa température diminue jusqu'à une température T3 (étape B). Ensuite, le passage à l'intérieur de l'échangeur de chaleur interne 20 abaisse la température du fluide réfrigérant jusqu'à une valeur T4 (étape C). Entre les températures T2 et T4, la pression du fluide réfrigérant reste constante.

Le fluide réfrigérant traversant le premier dispositif de détente 24 baisse en pression pour atteindre la valeur P1 (étape D). Pendant le passage au travers de l'évaporateur d'onduleur 38 (étape E), le fluide capte de la chaleur en provenance de l'onduleur 40 et sa température augmente jusqu'à une température T5. Ensuite la température du fluide réfrigérant augmente de nouveau jusqu'à une température T6 via le passage dans l'évaporateur batterie 42 (étape F). Enfin, le fluide réfrigérant revient à la température T1 après son passage dans l'échangeur de chaleur interne 20 (étape G).

La figure 2 permet d'illustrer l'économie d'énergie réalisée en utilisant le dispositif de chauffage électrique 46 avec la boucle de climatisation B. L'énergie Δh1 fournie par le compresseur 2 pour compresser le fluide réfrigérant est inférieure à l'énergie Δh2 dégagée par le condenseur interne 8 pour chauffer l'habitacle. Cela signifie que le compresseur électrique 2 consomme moins d'énergie qu'il n'en restitue à travers le dégagement de chaleur via le condenseur interne 8. Un apport d'énergie est donc nécessaire pour réaliser le cycle thermodynamique complet du fluide réfrigérant. Or, l'air extérieur lors des conditions hivernales ayant une température trop faible pour apporter l'énergie nécessaire pour accomplir le cycle thermodynamique, l'utilisation du dispositif de chauffage électrique 46 permet de palier à cela. Le dispositif de chauffage électrique 46 étant mis en oeuvre pour chauffer la batterie, la quantité d'énergie délivrée par le dispositif de chauffage électrique 46 est à la fois utilisée pour chauffer la batterie et apporter l'énergie manquante au fluide réfrigérant pour compléter son cycle thermodynamique. Ainsi, il n'est pas nécessaire d'ajouter une autre source d'énergie à la boucle de climatisation B. La consommation électrique de la batterie 100 est donc réduite tout en assurant le chauffage de la batterie 100 et de l'air de l'habitacle.

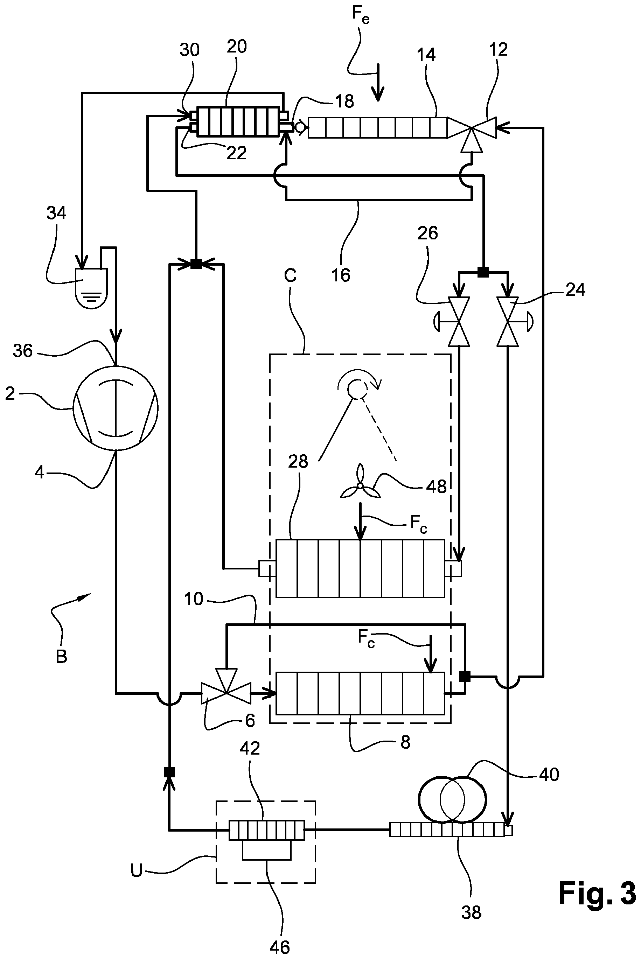

La figure 3 illustre un deuxième mode de réalisation du système de conditionnement thermique. Dans ce mode, les composants de la boucle de climatisation B sont identiques à ceux du premier mode de réalisation illustré à la figure 1. La particularité de ce mode de réalisation est l'échange thermique direct entre la batterie non représentée et l'évaporateur batterie 42 et le dispositif de chauffage électrique 46.

L'unité de traitement thermique U loge l'évaporateur batterie 42 et le dispositif de chauffage électrique 46. Contrairement au mode de réalisation de la figure 1, la batterie non représentée est en contact avec l'évaporateur batterie 42. Ainsi, l'échange thermique entre le fluide réfrigérant et la batterie se fait de manière directe. En outre, le dispositif de chauffage électrique 46 est en contact avec l'évaporateur batterie 42. Plus précisément, le dispositif de chauffage électrique 46 est en contact direct avec l'évaporateur batterie 42 et n'est pas en contact direct avec la boucle de climatisation B.

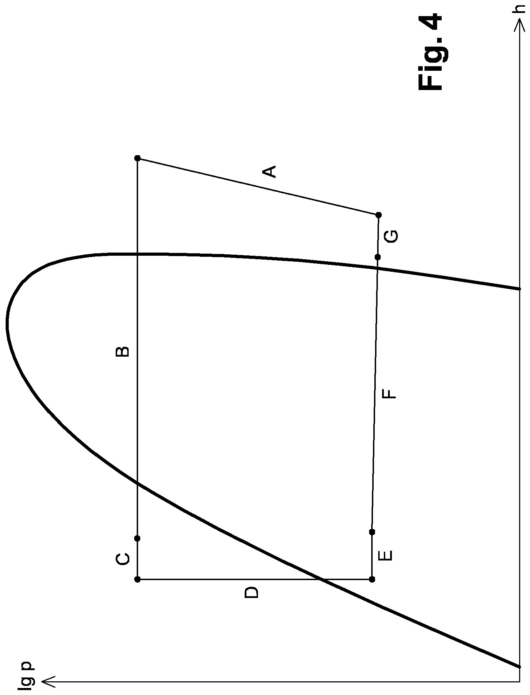

La figure 4 illustre le cycle thermodynamique du fluide réfrigérant pour le système de conditionnement thermique de la figure 3 lorsque le chauffage de l'air de l'habitacle et de la batterie sont requis.

L'étape A représente la compression du fluide réfrigérant à l'intérieur du compresseur 2. L'étape B représente l'échange de chaleur entre le flux d'air traversant l'installation de climatisation C et le fluide réfrigérant traversant le condenseur interne 8. L'étape C représente l'échange de chaleur à l'intérieur de l'échangeur de chaleur interne 20. L'étape D représente la détente du fluide opérée par le premier dispositif de détente 24. L'étape E représente l'échange de chaleur entre l'onduleur 40 et le fluide à travers l'évaporateur d'onduleur 38. La étape F représente l'échange de chaleur entre le dispositif de chauffage électrique 46 et le fluide à travers l'évaporateur batterie 42. Enfin, l'étape G représente l'échange de chaleur à l'intérieur de l'échangeur de chaleur interne 20.

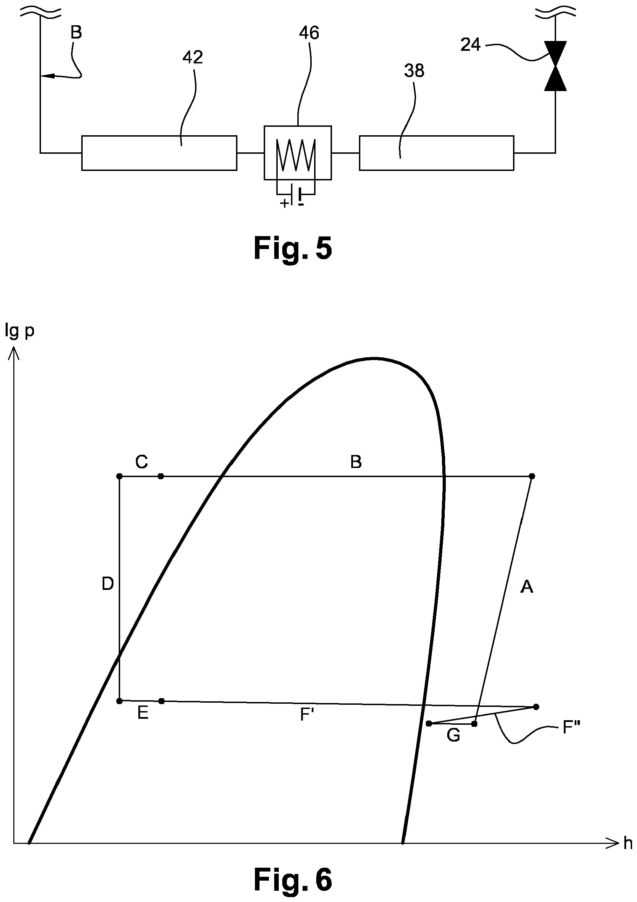

La figure 5 illustre une variante du deuxième mode de réalisation dans laquelle le dispositif de chauffage électrique 46 est directement en contact avec la boucle de climatisation B. Cette figure illustre uniquement les éléments de la boucle de climatisation B disposés entre le premier dispositif de détente 24 et l'échangeur de chaleur interne 20 pour des raisons de lisibilité de la figure. Le dispositif de chauffage électrique 46 est localisé au sein de la boucle de climatisation B en aval de l'évaporateur d'onduleur 38 selon le sens de parcours du fluide à l'intérieur de la boucle de climatisation B, et plus précisément entre l'évaporateur d'onduleur 38 et l'échangeur batterie 42. Dans cette variante de réalisation, l'évaporation du fluide réfrigérant se fait via l'apport de chaleur de l'onduleur 38 et l'apport du dispositif de chauffage électrique 46. En conséquence, l'apport de chaleur pour la batterie est réalisé par le fluide réfrigérant via l'échangeur batterie 42. Ainsi, cet échangeur batterie 42 fonctionne comme un condenseur puisque le fluide réfrigérant passant au travers cède de la chaleur à la batterie.

La figure 6 illustre le cycle thermodynamique du fluide pour le système de conditionnement thermique de la figure 5 lorsque le chauffage de l'air de l'habitacle et de la batterie sont requis.

Les étapes A, B, C, D, E et G sont identiques à celles de la figure 4. Ceci se comprend du fait que l'architecture de la boucle de climatisation B entre le compresseur 2 et l'évaporateur d'onduleur 38 est identique.

La étape F' représente l'échange thermique entre le dispositif de chauffage électrique 46 et le fluide réfrigérant. Ici, le fluide réfrigérant capte la chaleur en provenance du dispositif de chauffage électrique 46 et augmente sa température. Bien que le dispositif de chauffage électrique 46 selon cette variante ne soit pas en contact direct avec la batterie, il participe toujours à son réchauffement via l'intermédiaire de la boucle de climatisation B. En effet, le fluide réfrigérant étant chauffé par le dispositif de chauffage électrique 46, il cède suffisamment de chaleur à la batterie via l'échangeur batterie 42 pour que la batterie soit chauffé et conserve une température constante de sorte à prolonger sa durée de vie. L'étape F" illustre cet échange de chaleur du fluide réfrigérant vers la batterie par l'intermédiaire de l'échangeur batterie 42. Il est à noter que le dispositif de chauffage électrique 46 fournit assez d'énergie thermique pour à la fois chauffer la batterie et contribuer au cycle thermodynamique du fluide réfrigérant.

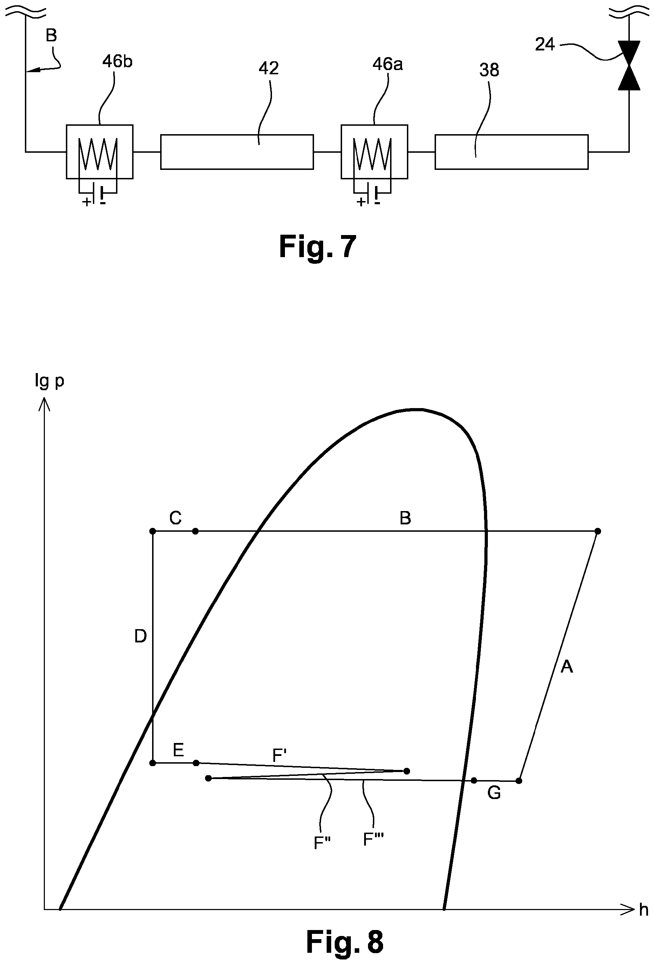

La figure 7 illustre une variante du deuxième mode de réalisation dans laquelle le dispositif de chauffage électrique 46 se divise en deux parties, un dispositif de chauffage électrique primaire 46a situé en aval de l'évaporateur d'onduleur 38 et en amont de l'échangeur batterie 42 et un dispositif de chauffage électrique secondaire 42b situé en aval de l'échangeur batterie 42.

La figure 8 illustre le cycle thermodynamique du fluide pour le système de conditionnement thermique de la figure 7 lorsque le chauffage de l'air de l'habitacle et de la batterie sont requis.

Les étapes A, B, C, D, E, F', F" et G sont identiques à celles de la figure 6. Ceci se comprend du fait que l'architecture de la boucle de climatisation B entre le compresseur 2 et l'évaporateur d'onduleur 38 est identique. Dans l'étape F', le chauffage du fluide réfrigérant est réalisé par le dispositif de chauffage électrique primaire 46a. Dans l'étape F'", le chauffage du fluide réfrigérant est réalisé par le dispositif de chauffage électrique secondaire 46b.

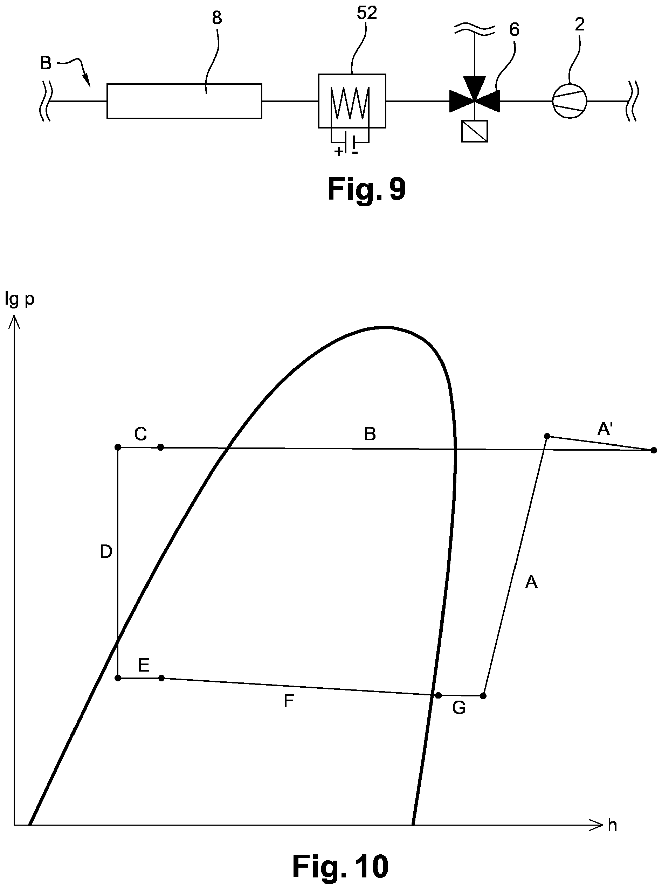

La figure 9 illustre une variante selon l'invention applicable au deuxième mode de réalisation. Dans cette variante, un dispositif de chauffage électrique additionnel 52 est localisé sur la boucle de climatisation B. Plus précisément, ce dispositif de chauffage électrique additionnel 52 est placé en amont du condenseur interne 8 selon le sens de parcours du fluide réfrigérant à l'intérieur de la boucle de climatisation B. La présence du dispositif de chauffage électrique additionnel 52 permet de fournir de la chaleur au fluide réfrigérant juste avant son passage à l'intérieur du condenseur interne 8. De ce fait, le contrôle de température dynamique est facilité pour le fluide réfrigérant. En effet, le dispositif de chauffage électrique additionnel 52 permet d'ajuster au mieux la quantité de chaleur requise pour chauffer le flux d'air Fc traversant le condenseur interne 8, lorsque la chaleur fournie par le travail du compresseur 2 n'est pas suffisante.

La figure 9 illustre de manière simplifiée la portion de la boucle de climatisation B comprenant un dispositif de chauffage électrique additionnel 52 en amont du condenseur interne 8.

Les figures 10, 11, 12, illustrent le cycle thermodynamique du fluide pour le système de conditionnement thermique des figures 3, 5 et 7 respectivement lorsque le chauffage de l'air de l'habitacle et de la batterie sont requis.

En figure 10, une phase supplémentaire A', entre la phase A et la phase B de la figure 4 illustre le chauffage du fluide par le dispositif de chauffage électrique additionnel 52. En conséquence, la phase B dans laquelle on chauffe le flux d'air Fc de l'installation de climatisation C correspond à une énergie thermique délivrée plus importante que la phase B de la figure 4.

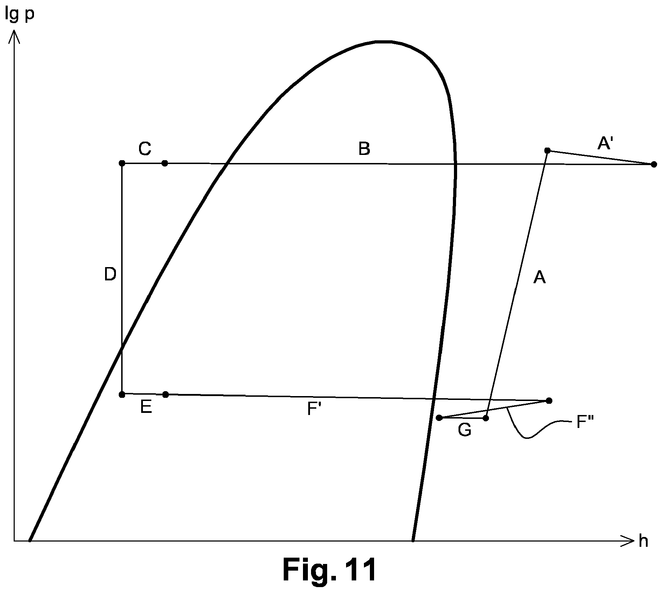

En figure 11, la phase A est celle de la compression du fluide réfrigérant. Le chauffage du fluide réfrigérant par le dispositif de chauffage électrique additionnel 52 est représenté par la phase A'. La perte de chaleur du fluide réfrigérant au niveau du condenseur interne 8 est la phase B. La phase C illustre le passage du fluide dans l'échangeur de chaleur interne 20. La phase D illustre la détente du fluide réfrigérant par le premier dispositif de détente 24 et la phase E correspond au chauffage du fluide par le chaleur de l'onduleur 38. La phase F' correspond au chauffage du fluide par le dispositif de chauffage électrique 46, la phase F" est la phase dans laquelle le fluide cède de la chaleur à la batterie via l'évaporateur batterie 42 et la phase G illustre le passage du fluide dans l'échangeur de chaleur interne 20. La figure 10 permet de constater que la quantité de chaleur délivrée au flux d'air Fc de l'installation de climatisation C (phase B) est supérieure à celle illustrée à la figure 6.

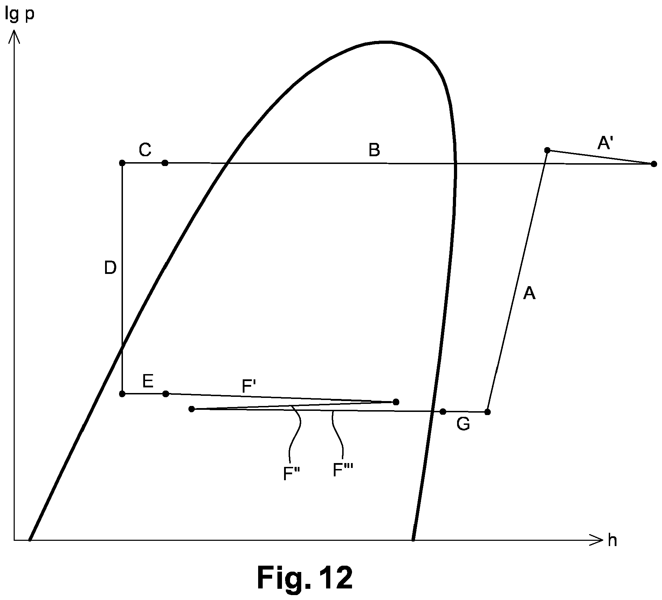

En figure 12, la phase A' supplémentaire du au dispositif de chauffage électrique additionnel 52 apparaît par rapport à la figure 8.

## Revendications

1. Système de conditionnement thermique d'un véhicule automobile comprenant :
- une boucle de climatisation (B) dans laquelle circule un fluide réfrigérant et comprenant un compresseur (2), au moins deux échangeurs de chaleur (8, 42) et au moins un dispositif de détente (24, 26), l'un des au moins deux échangeurs de chaleur (8, 42) étant un condenseur relié à la batterie ;
- une unité de traitement thermique (U) d'une batterie (100) du véhicule comprenant un moyen de traitement thermique (46) apte à échanger thermiquement avec la batterie (100) du véhicule,
le moyen de traitement thermique (46) échangeant thermiquement avec la boucle de climatisation (B),
**caractérisé en ce que**
le moyen de traitement thermique (46) est, d'une part, en contact avec la boucle de climatisation (B) et, d'autre part, un dispositif de chauffage électrique,
le moyen de traitement thermique (46) étant situé en amont, selon le sens de parcours du fluide réfrigérant, du condenseur (42),
un moyen de traitement thermique additionnel (52) étant en contact avec la boucle de climatisation (B) et le moyen de traitement thermique additionnel (52) étant situé en amont du condenseur interne (8).

2. Système selon la revendication 1, dans lequel le moyen de traitement thermique (46) est en contact avec l'un des au moins deux échangeurs de chaleur (8, 42).

3. Système selon la revendication 2, dans lequel l'échangeur de chaleur (42) en contact avec le moyen de traitement thermique (46) est un évaporateur.

4. Procédé de gestion thermique d'un système de conditionnement thermique selon l'une quelconque des revendications précédentes et d'une installation de climatisation (C) d'un véhicule, dans lequel il comprend les étapes suivantes :
- mise en oeuvre du moyen de traitement thermique (46)
- mise en oeuvre de l'installation de climatisation (C) en mode recyclage
- mise en oeuvre de la boucle de climatisation (B)
- mesure de la température de l'air de l'habitacle du véhicule
- diminution de la consommation électrique du moyen de traitement thermique (46) lorsque la température de l'air de l'habitacle augmente.

## Patentansprüche

1. Temperaturkonditionierungssystem eines Kraftfahrzeugs, umfassend:
- einen Klimatisierungskreislauf (B), in welchem ein Kältemittel zirkuliert und der einen Kompressor (2), wenigstens zwei Wärmeaustauscher (8, 42) und wenigstens eine Expansionsvorrichtung (24, 26) umfasst, wobei einer der wenigstens zwei Wärmeaustauscher (8, 42) ein Kondensator ist, der mit der Batterie verbunden ist;
- eine Einheit zur Wärmebehandlung (U) einer Batterie (100) des Fahrzeugs, die ein Wärmebehandlungsmittel (46) umfasst, das geeignet ist, mit der Batterie (100) des Fahrzeugs Wärme auszutauschen,
wobei das Wärmebehandlungsmittel (46) mit dem Klimatisierungskreislauf (B) Wärme austauscht, **dadurch gekennzeichnet, dass**
das Wärmebehandlungsmittel (46) einerseits mit dem Klimatisierungskreislauf (B) in Kontakt steht und andererseits eine elektrische Heizvorrichtung ist, wobei sich das Wärmebehandlungsmittel (46), auf die Strömungsrichtung des Kältemittels bezogen, stromaufwärts des Kondensators (42) befindet, wobei ein weiteres Wärmebehandlungsmittel (52) mit dem Klimatisierungskreislauf (B) in Kontakt steht und das weitere Wärmebehandlungsmittel (52) sich stromaufwärts des inneren Kondensators (8) befindet.

2. System nach Anspruch 1, wobei das Wärmebehandlungsmittel (46) mit einem der wenigstens zwei Wärmeaustauscher (8, 42) in Kontakt steht.

3. System nach Anspruch 2, wobei der Wärmeaustauscher (42), der mit dem Wärmebehandlungsmittel (46) in Kontakt steht, ein Verdampfer ist.

4. Verfahren zum Thermomanagement eines Temperaturkonditionierungssystems nach einem der vorhergehenden Ansprüche und einer Klimaanlage (C) eines Fahrzeugs, wobei es die folgenden Schritte umfasst:
- Anwendung des Wärmebehandlungsmittels (46),
- Anwendung der Klimaanlage (C) im Umluftbetrieb,
- Anwendung des Klimatisierungskreislaufs (B),
- Messung der Temperatur der Luft des Innenraums des Fahrzeugs,
- Verringerung des Stromverbrauchs des Wärmebehandlungsmittels (46), wenn sich die Temperatur der Luft des Innenraums erhöht.

## Claims

1. Heat conditioning system for a motor vehicle comprising:
- an air conditioning loop (B) in which a coolant circulates and comprising a compressor (2), at least two heat exchangers (8, 42) and at least one decompression device (24, 26), one of the at least two heat exchangers (8, 42) being a condenser linked to the battery;
- a heat treatment unit (U) of a battery (100) of the vehicle comprising a heat treatment means (46) capable of exchanging heat with the battery (100) of the vehicle,
the heat treatment means (46) exchanging heat with the air conditioning loop (B),
**characterized in that**
the heat treatment means (46) is, on the one hand, in contact with the air conditioning loop (B), and, on the other hand, an electric heating device,
the heat treatment means (46) being situated,in the direction of travel of the coolant, upstream of the condenser (42),
an additional heat treatment means (52) being in contact with the air conditioning loop (B) and the additional heat treatment means (52) being situated upstream of an internal condenser (8).

2. System according to Claim 1, in which the heat treatment means (46) is in contact with one of the at least two heat exchangers (8, 42).

3. System according to Claim 2, in which the heat exchanger (42) in contact with the heat treatment means (46) is an evaporator.

4. Heat management method for a heat conditioning system according to any one of the preceding claims and of an air conditioning installation (C) of a vehicle, in which it comprises the following steps:
- implementation of the heat treatment means (46)
- implementation of the air conditioning installation (C) in recycling mode
- implementation of the air conditioning loop (B)
- measurement of the air temperature of the vehicle passenger compartment
- reduction of the electrical consumption of the heat treatment means (46) when the passenger compartment air temperature increases.
